**Europäisches Patentamt**

**European Patent Office**

**Office européen des brevets**

(11) Publication number: **0 190 223**
**B1**

(12) **EUROPEAN PATENT SPECIFICATION**

(45) Date of publication of patent specification: **07.11.90**

(21) Application number: **85903770.7**

(22) Date of filing: **19.07.85**

(86) International application number:
**PCT/US85/01376**

(87) International publication number:
**WO 86/01007 13.02.86 Gazette 86/04**

(51) Int. Cl.⁵: **G 02 F 3/00**

(54) **PHASE INSENSITIVE OPTICAL LOGIC GATE DEVICE.**

(30) Priority: **31.07.84 US 636448**

(43) Date of publication of application:
**13.08.86 Bulletin 86/33**

(45) Publication of the grant of the patent:
**07.11.90 Bulletin 90/45**

(84) Designated Contracting States:
**DE FR GB IT**

(56) References cited:
**Electronics International, volume 55, no. 26, December 1982, New York, (US) L. Waller:"Components for optical logic start to click"**

**Patents Abstracts of Japan, volume 6, no. 255, (P-162), 14 December 1982, & JP-A-56-38314**

(73) Proprietor: **Hughes Aircraft Company**
**7200 Hughes Terrace P.O. Box 45066**
**Los Angeles, California 90045-0066 (US)**

(72) Inventor: **JENSEN, Stephen, M.**
**402 Virginia Avenue**
**El Segundo, CA 90245 (US)**

(74) Representative: **Colgan, Stephen James et al**
**CARPMAELS & RANSFORD 43 Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 190 223 B1

**Description**

The present invention relates to optical devices and, in particular, to a nonlinear optical logic device in which at least two input light beams having independent modes are launched, the device operating independently of the relative phase between the two inputs.

Bistable optical devices wherein the intensity of the output optical beam may be in either a low or high state for a given optical input, depending on the prior history of the device, have been previously described in the prior art. The potential applications for such devices include use as optical memory element, limiters, switches and logic gates.

One such example of a prior art bistable optical device is the nonlinear Fabry-Perot interferometer or resonator. The bistable feature of this device is provided by feedback due to mirrors and by the nonlinear refractive index of the medium that fills the device cavity. Although the bistable nature of the device would lead one to conclude that it could be utilized as an optical logic device in a multiple device optical data processing system, the requirement that the two optical input beams to combined prior to launch into the resonator in turn requires that the input beams be in phase coherence in order for the device to perform its intended logic function. This latter requirement is extremely difficult to provide in such systems. Further, Fabry-Perot optical logic "OR" gates could provide problems in complex optical data systems since the output signal phase shift is dependent on the input data, the output "1" logic signal for two input "1s" being different from the output "1" logical signal for an optical input comprising a logical "1" and a logical "0". Compensation for this difference is very difficult.

The use of optical nonlinear ring resonators as filters and bistable devices has also been described. For example, an article by R. G. Walker et al., "Integrated Optical Ring Resonators Made by Silver Ion-Exchange in Glass", *Applied Optics*, Vol. 22, No. 7, pp. 1029—1031 (April, 1983), describes an integrated optical ring resonator fabricated using silver ion-exchanged waveguides and used as a wavelength-selective filter.

In an article by Haavisto et al., "Resonance Effects in Low Loss Ring Waveguides", *Optical Letters,* Vol. 5, No. 12, pp. 510—512 (December, 1980), a technique for fabricating a thin-film ring resonator is described. An article by Sarid, "Analysis of Bistability in a Ring Channel Waveguide", *Applied Optics*, Vol. 6, No. 11, pp 552—3 (November 1981), discloses the bistable operation of a ring-channel waveguide that is coupled to two line channels.

Although the aforementioned articles illustrate that the bistable (on-off) characteristics of nonlinear ring resonators in response to a single light beam input is widely known, only recently has an attempt been made to configure a device such that two light beams could be applied thereto so that the device could be utilized as an optical logic gate. In particular, an article entitled "Components for Optical Logic", *Electronics*, pp. 31—32 (December 29, 1982), discloses a bistable optical device comprising a nonlinear ring resonator and two waveguide-like channels. The device, a one-chip optical gate, launches an input light beam into the resonator by first combining two optical inputs in one of the waveguide channels. Although this chip provides significant improvements over prior devices, a factor in limiting its use in large optical data processing systems in the same factor that limits wide application of a Fabry-Perot optical logic gate; phase coherency is required between the two optical inputs.

What is therefore desired is to provide an optical device which is capable of providing logic functions in response to at least two optical signal inputs and wherein the device performance is insensitive to the phase coherency of the input signals. Preferably, the logical operation can be performed entirely with optical components.

JP—A—57-151919, see Patents Abstracts of Japan, 6, No. 255, (P-162) (1133) describes an optical bistable device having an optical resonator into which are launched two laser beams of different frequencies. Bistability is obtained by providing a nonlinear medium in the resonator. The transmission characteristics of one laser beam is controlled by the second beam. The device is frequency-dependent and a frequency difference between the beams seems essential.

The present invention provides a nonlinear optical circuit device which is responsive to at least two light beam inputs applied thereto to provide optical logical gate functions. The device operates in a manner such that the relative phase of the input light beams does not effect the way the beams interact within the device.

According to the present invention there is provided an optical logic gate device comprising:—

a ring resonator providing a closed optical path;

launch means for launching at least two light beams into said optical path;

output means for providing an output signal representative of the output intensity of at least one of said launched light beams; and

phase shift varying means for varying the optical path length of said launched beams in said optical path in dependence on variations in beam intensities;

the zero field phase shift of said launched light beams being selected to establish a resonator nonlinear transmission characteristic such that a specific logic gate function is provided;

characterised in that:—

said launch means launches said at least two light beams into said optical path in opposite directions, so that the output signal, and the interaction between said launched beams, are independent of the relative phase between said beams.

The optical logic device of the present invention is insensitive to phase differences in the optical inputs, making the device useful in complex logic circuits such as high speed optical data processing/encryption systems. The technique of the present invention enables a one-chip, all-optical gate to be provided, with the potential for attaining multi-gigabit-per-second data speeds while offering immunity to radio-frequency interference in multi-chip optical data processing systems.

For a better understanding of the invention as well as other objects and further features thereof, reference is made to the following description which is to be read in conjunction with the accompanying drawings wherein:

Figures 1 and 2 illustrate in simplified form the operation of a Fabry-Perot resonator;

Figure 3 illustrates the typical input/output characteristics on a nonlinear Fabry-Perot resonator;

Figure 4 illustrates another typical input/output characteristics;

Figure 5 is a simplified schematic of the hybrid ring resonator utilized in a manner to illustrate its optical bistability characteristics;

Figure 6 is a schematic of the hybrid ring resonator of Figure 5 in an arrangement which utilizes an electronic circuit to control optical path length.

Figure 7 is a schematic of the hybrid ring resonator arranged to demonstrate the principle of the present invention, to provide a phase insensitive optical logic gate;

Figures 8a through 8f are oscillograms illustrating the optical input versus optical output for the hybrid ring resonator bistable optical device at various zero-field detunings;

Figures 9a and 9b are oscillograms of the input and output optical beams from the hybrid ring resonator operating as an optical AND gate and optical OR gate, respectively, generated by the schematic in Figure 6; and

Figure 10 is a schematic of an all optical logic gate using the principles of the present invention.

It should be noted that the same reference numerals identify identical components in each of the figures.

Figure 11 is a schematic of the device of Figure 10 shown operating in an alternative mode.

Figure 12 is a schematic of an integrated optic embodiment of an optical nonlinear ring resonator device used in accordance with the present invention.

In order to put the present invention in perspective, a brief review of light wave intersection in a cavity, specifically a resonator cavity, is now set forth.

Electromagnetic energy, such as light, can be characterized as an undulating disturbance moving in a medium with a constant velocity. Propagation of the wave is obtained by the effect being passed in the longitudinal direction. If two identical light beams are combined prior to being introduced into the input end of an enclosed chamber or cavity, and are in phase coherence, the light intensity actually introduced into the cavity will be enhanced (constructive intereference). If the light beams are out of phase, the light launched into the cavity will have decreased intensity (destructive interference).

In a Fabry-Perot or ring resonator, electromagnetic radiation is fedback and interferes, either constructively or destructively, with itself. The manner in which it interferes is determined by the phase shift accumulated by the electromagnetic field as it traverses the resonator, or equivalently the number of times the field undulates in the time it takes to complete the feedback loop. When the optical length of the feedback loop is an integral number of wavelengths, the resonator is at "resonance", interference being completely constructive in this condition. The intensity of the radiation in the resonator is at a maximum at resonance, falling to a minimum when the optical length of the feedback loop is an odd number of half-wavelengths. By filling the resonator with a nonlinear material, one achieves a condition in which the velocity of the electromagnetic field and, hence, the optical path length and phase shift depends on the magnitude of the electromagnetic field. The coupling of this intensity-dependent phase shift and the optical feedback gives rise to highly nonlinear transmission characteristics and optical bistability.

The basic principles described hereinabove are the basis for at least two well known prior art optical devices; the Fabry-Perot and ring resonator devices mentioned above. Typically, these devices when appropriately configured may function as either nonlinear transmission devices or bistable optical devices. The discussion that follows immediately is directed to the optical characteristics of resonators, particularly the Fabry-Perot and ring resonators. However, the present invention may operate in the nonlinear transmission mode, and such operation is described further below herein.

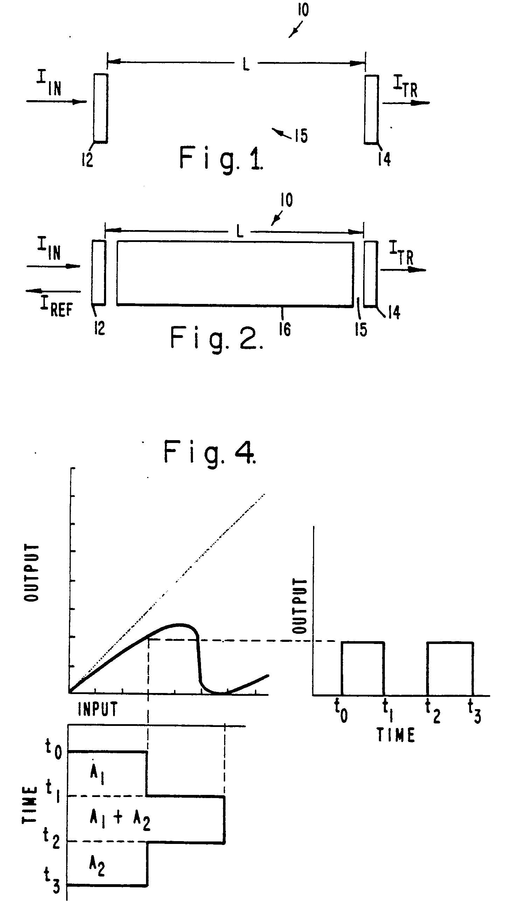

Figure 1 shows a Fabry-Perot resonator 10 having end mirrors 12 and 14 enclosing optical cavity 15. The transmissivity T of the cavity is given by

$$T = 1/\left[1 + \frac{4R}{1-R^2}\sin^2\left(\frac{2\pi Ln}{\lambda}\right)\right] \qquad (1)$$

wherein R is the reflectivity of mirrors 12 and 14; L is the length of the cavity 15; n is the index of refraction of the cavity material (air in Figure 1) and $\lambda$ is the wavelength of the incident light beam $I_{in}$.

In order to provide bistable and nonlinear optical operation, a nonlinear material 16, such as GaAs, is interposed in cavity 15 between mirrors 12 and 14 (Figure 2). In this case, the index of refraction term n in equation (1) has two components, a normal linear term $n_0$ independent on the intensity of light propagating in the material, and a nonlinear term $n_2I$, wherein $I$ is the intensity of light propagating in the nonlinear material 16. Thus, the transmission T of the Fabry-Perot resonator 10 depends upon the intensity of the light beam within the resonator. It is observed that introducing light in the Fabry-Perot device 10 pulls the device either on or off resonance and provides behavior patterns which can lead to optical nonlinear and bistable characteristics.

The argument of the sine squared term of equation (1) can be rewritten as:

$$\frac{2\pi nL}{\lambda}=kL \qquad (2)$$

wherein $kL$ is the total phase shift introduced within the resonator. (It is noted again that although the equations described are for a Fabry-Perot device, they also characterize the operation of single input ring resonators). This can then be rewritten as:

$$kL=\frac{2\pi n_oL}{\lambda}+\frac{2\pi L}{\lambda}n_2I \qquad (3)$$

the first term of the right-hand side of the equation being referred to as the zero field detuning $\phi_o$ (for light intensity of zero this term provides the phase shift), the second term of the right hand side of the equation being proportional to the intensity of the transmitted resonator light $I_{TR}$. It can be shown that the intensity of the resonator light input, $I_{IN}$ is related to the transmitted light intensity $I_{TR}$ by the equation:

$$I_{IN}=\frac{I_{TR}}{T} \qquad (4)$$

With $\phi_o=0$, the light beams within the resonator cavity add up constructively and, for small input intensities (fields), an output essentially equal to the input is provided. If $\phi_o$ is not equal to zero, phase shift is introduced into the resonator cavity 15 causing something less than total constructive interference to occur with small input intensity. However, the phase shift added with increasing input light intensity eventually causes a total constructive interference (resonance) to occur at some higher level of input intensity. In other words, by varying $\phi_o$ and then increasing the light input intensity, different transmission behaviors or characteristics can be provided due to the variation of phase shifts within the resonator cavity 15. By inspecting equation (3), it is apparent that $\phi_o$ can be varied by changing $\lambda$, L or $n_o$. $n_o$, in turn, can be varied by many effects, such as the electro-optic effect, piezo-optic effect, magneto-optical effect, and the like.

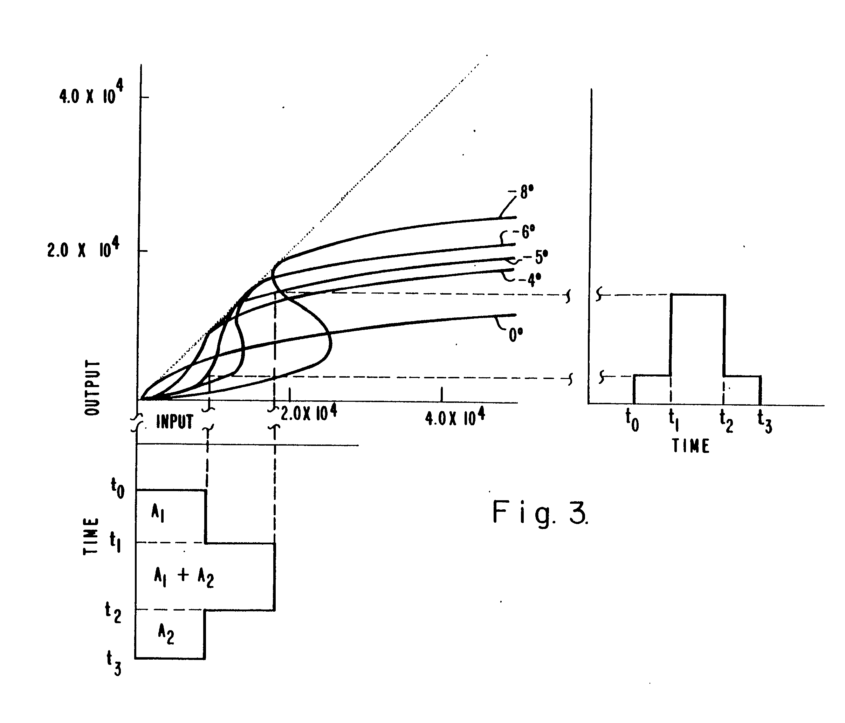

Figure 3 illustrates typical input/output characteristics of the nonlinear Fabry-Perot resonator 10 for the transmitted component. The output light intensity $I_{TR}$ is plotted versus the input light intensity for various values of the zero field detuning $\phi_o$. (The characteristics for a typical nonlinear ring resonator with a single input are substantially similar). As can be seen, as $\phi_o$ decreases from 0° towards −8° (zero field detuning is given in degrees due to the sine function of equation (1)), the characteristic varies from describing a limiter device ($\phi_o=0$) to one describing a bistable curve ($\phi_o=-8°$) wherein the characteristic curve bends back on itself. For the purpose of providing an optical logic device function, a characteristic curve such as provided by $\phi_o=-5°$ shows sufficient nonlinearity.

In order to demonstrate nonlinear operation in connection with two light beams, to show a digital logic function, the lower portion of the figure illustrates the case wherein two optical pulses, $A_1$ and $A_2$, are applied in time sequence to a Fabry-Perot device having the $\phi_o=-5°$ characteristic. The right-hand portion of the figure illustrates the resultant output intensities for the input conditions shown in the lower portion of the figure at times $t_0$—$t_3$. At time $t_0$, pulse $A_1$ is applied to the device and a relatively low output intensity pulse (approximately $0.25\times10^4$ W/cm²) is generated. At time $t_1$, both pulses $A_1$ and $A_2$ are combined and then applied to the device. It can be seen that a relatively large output pulse, approximately $1.5\times10^4$ W/cm², or six times the output when signal $A_1$ alone is applied, is generated. At time $t_2$, only the $A_2$ pulse is applied to the device and once again a $0.25\times10^4$ W/cm² light pulse is generated. At time $t_3$, the inputs return to zero, producing a zero output level. Thus, appalying the optical pulse sequence illustrated to the characteristic curve selected ($\phi_o=-5°$) provides an AND gate function.

The threshold values of the device can be easily adjusted such that an OR gate function is provided. Thus, in Figure 3, again using the $\phi_o=-5°$ curve, by setting the input beam intensities at about $2.0\times10^4$ W/cm², the output intensity is nearly the same for single and combined beam inputs, since the flat, upper portion of the curve is used. Again, no input yields no output. An OR gate function is thus provided.

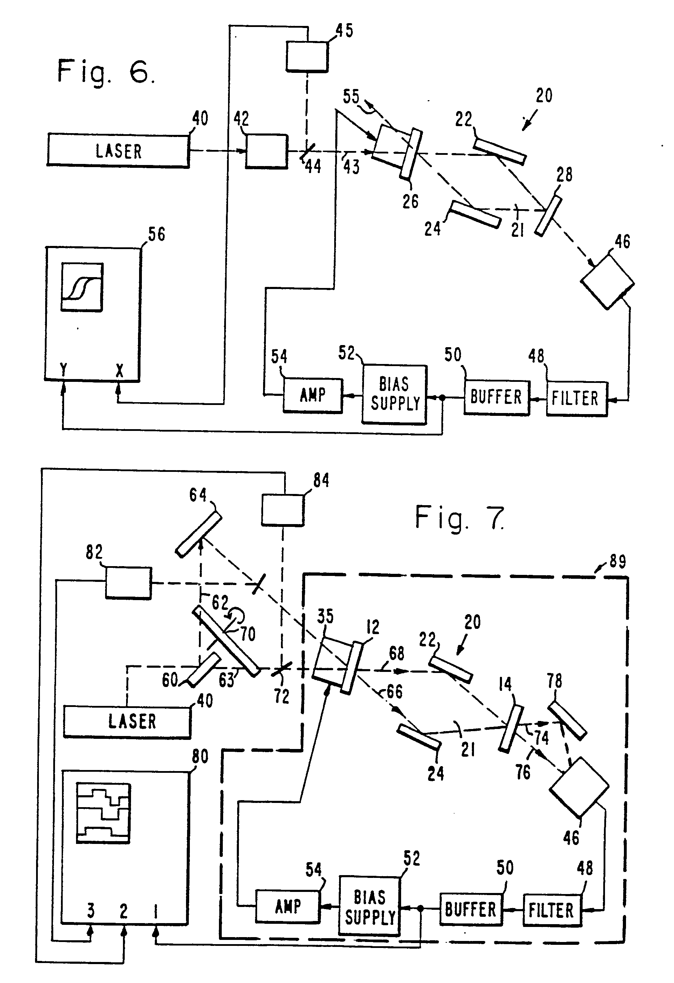

An exclusive OR function can also be obtained, by utilizing the reflected rather than the transmitted component of the output of the device. Figure 4 illustrates typical input/output characteristics of the nolinear Fabry-Perot resonator 10, similar to the graph shown in Figure 3 but plotting the intensity of the

reflected output $I_{REF}$, rather than the transmitted output intensity $I_{TR}$. It is noted that the reflected light output $I_{REF}$ is related to the transmitted output, ignoring losses, by:

$$I_{REF} = I_{IN} - I_{TR} \qquad (5)$$

By applying the same sequence of input light beams as described in connection with Figure 3, outputs are generated, as can be seen in the right-hand portion of Figure 4, which correspond to the operation of an exclusive OR gate.

Although the characteristic curves of Figures 3 and 4 indicate that Fabry-Perot devices can be utilized for optical logic, at least as far as a single gate is concerned, using the Fabry-Perot device is a large scale optical data processing system is impractical. This is because, as set forth hereinabove, the Fabry-Perot operates by depending on the relative phase of the combined input optical beams and requires initial phase coherency of the input beams, a complex and relatively expensive task. Furthermore, in a large optical circuit including OR gates, the data dependent phase shifts that are generated in the output signals are not easily compensated to permit their use as input signals in subsequent logic stages.

In order to avoid the disadvantages of the Fabry-Perot optical logic gate, the present invention provides a novel technique wherein the input optical beams are separately launched into a ring resonator as linearly independent modes. When practised in accordance with the present invention, this eliminates phase constraints with respect to input beams for optical logic devices. Thus, the two separately launched input optical beams interact appropriately, independent of their relative phases within the resonator cavity.

Figure 5 is a simplified schematic of a ring resonator which may be used to provide the nonlinear and optical bistability characteristics described with reference to Figure 3. In particular, a "hybrid" structure is shown, in which nonlinearity is provided by way of an electro-optical servo loop, described hereinafter. Two totally reflecting mirrors 22 and 24 and two partial reflectors 26 and 28 are affixed adhesively to adjustable mirror mounts 30, 32, 34 and 36, respectively, as illustrated. A piezoelectric cell 38 is sandwiched between reflector 26 and mount 34. The piezoelectric cell 38 is used to adjust the round-trip length of the light beam inside the resonator cavity 21 by displacing reflector 26, thus varying the phase shift characteristics of the cavity as will be described in more detail hereinafter. In this embodiment, the partial reflectors 26 and 28 are approximately 90% relective. However, other reflectivities may be suitable on other applications. In general, if a substantially lower reflectivity is used, a higher degree of nonlinearity is required and the discrimination between different output states is reduced.

The device 20 is operated as a ring resonator by setting the correct input beam angle to close the loop, in this embodiment selected to be 16-1/4°, and adjusting the mirrors 22 and 24 to maximize the resonant characteristics of the cavity.

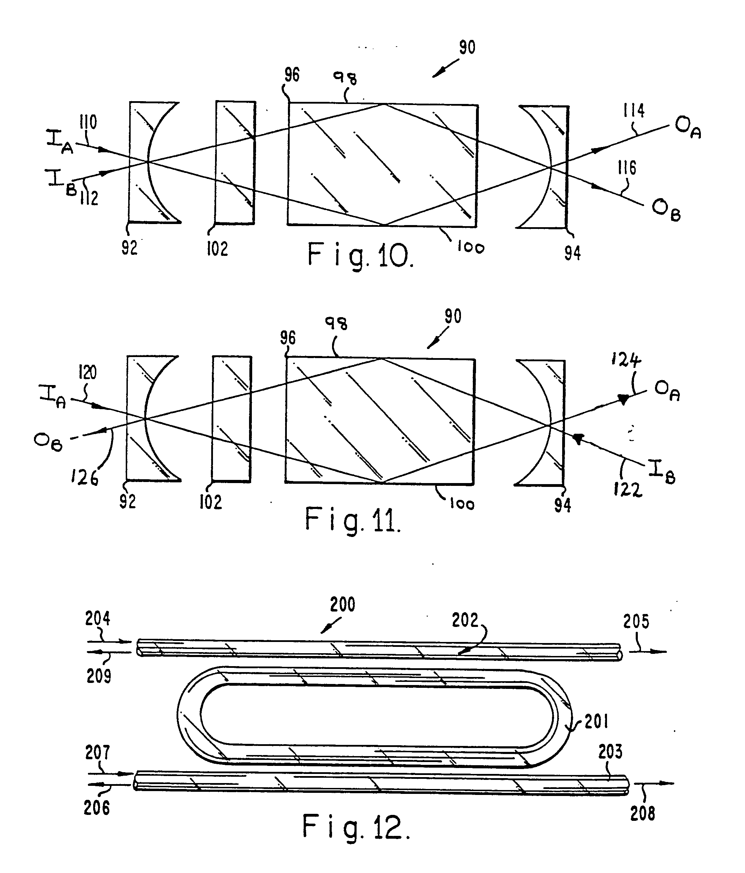

Figure 6 shows device 20 in more detail, arranged to provide the aforementioned characteristics. As mentioned above, in this embodiment an electronic circuit is utilized to control the ring optical path length, L, to vary the cavity phase shift and thereby provide the desired nonlinear optical characteristics. (An all optical device for providing optical logic gates is described below in connection with Figures 10 and 11).

The output of a single mode 514.5-nm argon laser 40 is modulated externally by a Pockels cell modulator 42. To demonstrate the principles of operation, this modulator is driven with a triangular wave; generating a modulation depth greater than 95%. The modulated optical beam 43 is launched into the ring resonator cavity 21 via partial reflector 26. Optical radiation transmitted by the resonator 20 is detected by a reverse-biased PIN diode 46. PIN diode 46 generates an electrical signal the magnitude of which is proportional to the intensity of the light beam incident thereon. The output of the PIN diode 46 is processed first by a low-pass filter 48 to prevent oscillation of the electrical feedback loop illustrated. After being filtered, the electric signal passes through a buffer 50 and to a bias supply 52 which adds a constant voltage to the signal. The signal is then amplified by a high-voltage amplifier 54 and applied to the piezoelectric cell 38. Piezoelectric cell 38 varies the position of reflector 26 in response to the magnitude of the voltage applied thereto from amplifier 54, thus effectively varying the propagation length of cavity 21. The phase shift of the propagated light is thus varied in proportion to the intensity of the light propagated through cavity 21, a condition necessary to generate characteristic curves similar to Figure 3. For display purposes, the output of buffer 50 also drives the "Y" input of an oscilloscope 56 and the electrical output of PIN diode 45, representative of the optical input, is applied to the "X" input.

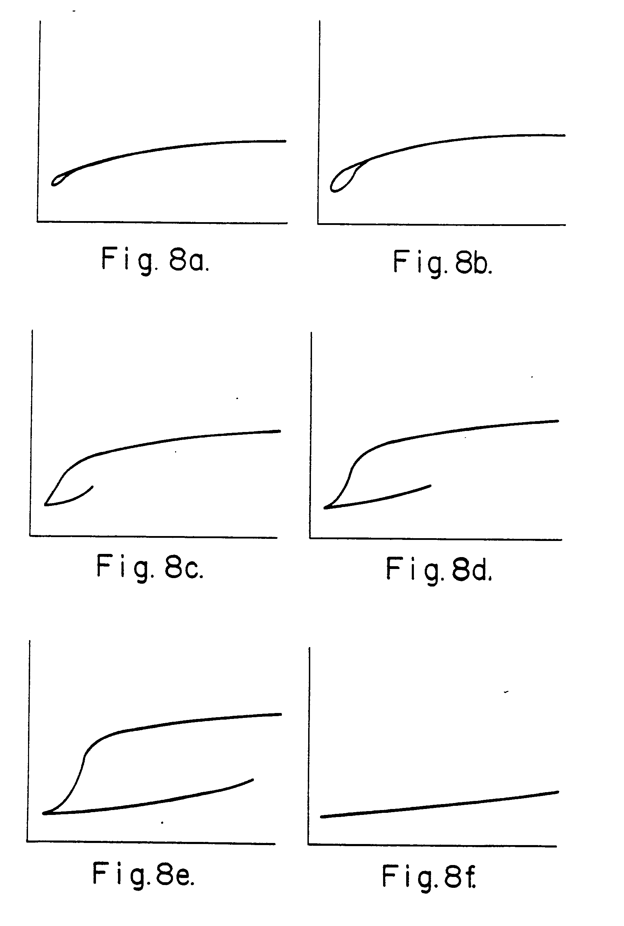

Figure 8 shows oscillograms of the input/output characteristics of device 20 generated by oscilloscope 56. In Figure 8a, the bias supply is set at 60 mV, thus voltage biasing device 20 (while laser 40 is turned off) to a zero-field detuning of approximately 0°. The figure shows that as the optical input increases, the transmission of the device decreases, thus illustrating the optical limiting characteristics described with reference to Figure 3. Figure 8b shows device behavior with a bias of 50 mV, corresponding to a zero-field detuning of approximately −18°. Although the open loop at the low-intensity end of the trace seems to indicate the onset of bistability, it actually results from slowing as the switch point is approached. Figure 8c corresponds to a bias signal of 40 mV, or zero-field detuning of approximately −36°. This figure clearly indicates nonlinearity (in fact, it shows bistability), with a nearly 4:1 difference in intensity between the high and low transmitting states. Figures 8d and 8e show how the device operates with even greater zero-field detuning. In Figures 8d and 8e, the bias voltages are 30 mV and 20 mV, respectively, with corresponding detunings of −54° and −72°. With a bias voltage of 10 mV corresponding to a zero-field detuning of −90°, the input is insufficient to switch the device to the high-output state as shown in Figure 8f. The above illustrates that device 20 can operate as an optical logic device in a manner similar to the Fabry-Perot device described with reference to Figure 3. It should be noted that the configuration of device 20 prevents the reflected optical beam 55 from reentering the laser source 40. This is important since even a small amount of feedback can seriously degrade the characteristics of most lasers.

Figure 7 illustrates device 20 arranged in a manner to provide optical logic gate functions. In particular, a beam splitter 60 supplies a second input beam 62 for the resonator device 20. Beam 62 is reflected off mirror 64 and launched into device 20 as a counter-propagating beam 66. Beam portion 63 is transmitted through beam splitter 60 into resonator cavity 21 as beam 68 via a light chopper 70 and beam splitter 72, beam 68 propagating in cavity 21 in a direction opposite to the direction of propagation of beam 66. Beam portion 74 and 76 of beams 66 and 68, respectively, are transmitted through mirror 14 to detector 46 mirror 78 directing beam 74 to detector 46. In order to avoid interference effects between the two beams, mirror 78 is adjusted to ensure that beams 74 and 76 do not overlap on detector 46. Mechanical chopper 70 is positioned so as to interrupt both input beams 62 and 63.

In order to observe the characteristics generated by the configuration shown in Figure 7, a portion of the input beams 62 and 63 are coupled to first and second "Y" inputs of a multi-trace oscilloscope 80 via PIN detectors 82 and 84, respectively. The output beams are coupled to a third "Y" input of oscilloscope 80 via PIN detector 46, filter 48 and buffers 50.

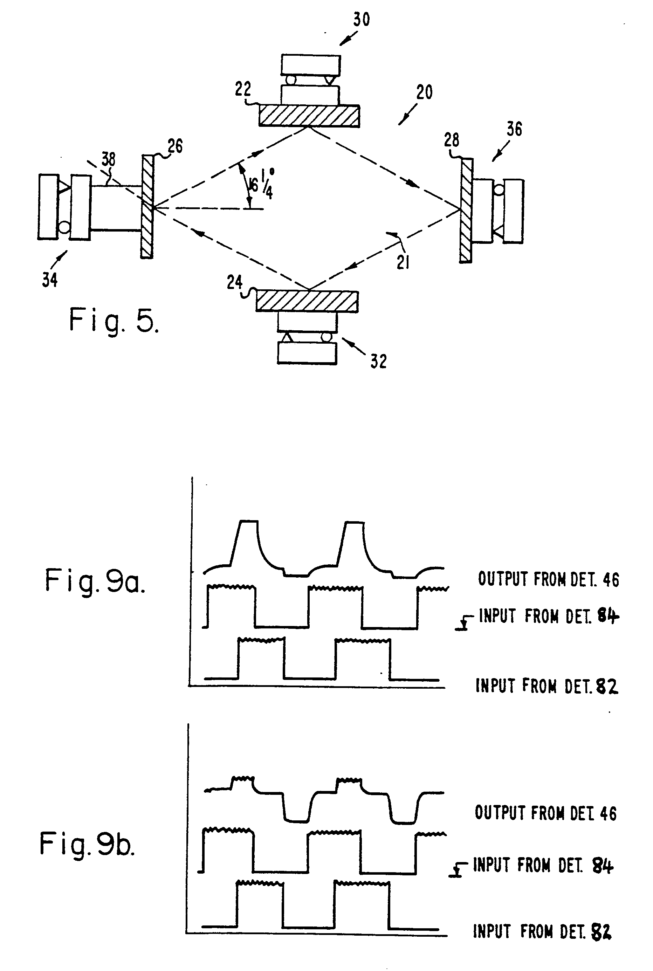

The display produced by the arrangement of Figure 6 is shown in Figure 9. Figure 9a shows an oscillogram of the device 20 operating as an optical AND gate. The lowest trace in the figure is the light detected by detector 82 in Figure 7 and comprises a square wave operating at a frequency of approximately 12 Hz. The central trace is the light detected by detector 84 of Figure 7 and is identical to that from detector 82, except for a 90° phase shift introduced by appropriately positioning chopper 70. For illustrative purposes, all four binary inputs are generated in each cycle. The uppermost trace in the figure shows the total light transmitted by the device 20. When both optical inputs are high, the detector output is approximately 45 mV. However, when only one input is present, the output drops to 1/5 of this value, or approximately 9 mV. This corresponds to operation as an optical AND gate.

It should be clear that in Figure 7 the components that actually comprise the hybrid ring resonator are within the dashed box labeled 89, the other components of the schematic being used to both demonstrate and illustrate the optical logic gate capabilities of the hybrid resonator 89. In operation as an optical logic gate, light beams 62 and 63 would be provided by separate sources, i.e., either from separate light beams initially introduced into the circuit containing the hybrid resonator 89 or from the outputs of other optical logic gates.

The operating characteristic of an OR gate are obtained by increasing the effective input power. These data are shown in Figure 9b. As in Figure 9a, the input signals are shown by the two lower traces in the figure. The upper trace shows the detected output. When both inputs are present, an output of 36 mV is obtained. With only one input, the output drops by only 29% to 25.5 mV, device 20 thus operating as an optical OR gate in the hybrid arrangement shown in Figure 6. The insensitivity of device 20 to the relative phase between the optical inputs 62 and 63 has been demonstrated by slightly disturbing mirror 64 in Figure 6. No effect on the outputs shown in Figure 8 were observed.

Figure 10 is a schematic of another nonlinear ring resonator device 90 constructed and operating in accordance with the present invention. The device 90 illustrated in Figure 10 is essentially all optical and does not require electronic circuitry to provide the nonlinearity required for operation as an optical logic device. The resonator device comprises mirrors 92 and 94, preferably curved as shown for increased resonator efficiency. Glass member 96 to provide totally reflecting surfaces 98 and 100, and a block of nonlinear material 102, typically GaAs, are interposed between mirror 92 and glass member 96. Nonlinear material 102 is rotated to the Brewster angle to minimize reflections from material 102.

As shown, two input optical beams, $I_A$ 110 and $I_B$ 112, are launched into the cavity 104 and two output beams, $O_A$ 114 and $O_B$ 116, emerge from mirror 94. The device 90 may be used as an OR gate or an AND gate, depending, as above, upon the levels of the input optical beams. If the device is used as an OR gate both output beams must be combined for use as an output signal. If the device is used as an AND gate, either output beam may be used as an output signal.

Figure 11 is a schematic of the device described above in connection with Figure 10, shown operating in an alternative mode. Input beams $I_A$, 120 and $I_B$, 122 are shown entering opposite ends of device 90, and output beams $O_A$, 124 and $O_B$, 126 likewise are shown exiting opposite ends. While in the mode depicted in Figure 10 the device 90 utilizes the transmitted characteristics of the output beams, the mode depicted in Figure 11 utilizes the reflected characteristics, thus permitting its use as an exclusive OR gate. When utilized in this manner, both outputs must be combined for use as an output signal.

Figure 12 is a schematic of another embodiment of an optical nonlinear ring resonator device 200 which can be adapted to utilize the princples of the present invention. The device 200 illustrated in Figure 12 is essentially all optical and does not require electronic circuitry to provide the nonlinearity required for operation as an optical logic device. The resonator comprises a racetrack shaped closed optical waveguide 201, placed between and in close proximity to two straight optical paths 202 and 203. Because of their close proximity to the closed optical path 201, light entering the straight paths 202 and 203 is coupled into the closed path via a process known as evanescent field coupling. The regions over which the straight and closed optical paths are in close proximity act, in effect, as the input and output partial reflectors 92 and 94 of Figure 10. The curved sections of closed optical path 201 act, in effect, as the total reflectors 98 and 100 of Figure 10. Optical nonlinearity is introduced into the cavity as a result of the optically nonlinear material in which the optical paths are fabricated or as a result of materials added to the structure containing the optical paths (e.g.: overlayers, materials diffused in, etc.). The refractive index of the nonlinear material varies with the intensity of light input, thereby altering the optical path length and providing the desired nonlinear optical characteristics. As illustrated, an input optical beam 204, is launched into the straight optical path 202, and output optical beams 205 and 206 exit from the straight optical paths 202 and 203. Device 200, having the single optical input beam 204 launched into the optical path 202, provides nonlinear and bistable characteristics similar to those shown in Figures 3, 8 and 9. By launching a second optical beam 207 into the optical path 203, a counterpropagating mode is launched into the closed optical path (resonator) 201 and outputs 208 and 209 are generated. By selecting the appropriate nonlinear material in which to fabricate the device and the appropriate zero-field detuning, device 200 can be utilized as an all-optical logic gate.

## Claims

1. An optical logic gate device comprising:—
a ring resonator (20; 90; 201) providing a closed optical path;
launch means for launching at least two light beams (62; 63; 110; 112; 120; 122; 204, 207) into said optical path;
output means for providing an output signal representative of the output intensity of at least one of said launched light beams; and
phase shift varying means for varying the optical path length of said launched beams in said optical path in dependence on variations in beam intensities;
the zero field phase shift of said launched light beams being selected to establish a resonator nonlinear transmission characteristic such that a specific logic gate function is provided;
characterised in that:—
said launch means launches said at least two light beams into said optical path in opposite directions, so that the output signal, and the interaction between said launched beams, are independent of the relative phase between said beams.

2. A device according to Claim 1 wherein said phase shift varying means comprises a nonlinear optical material (102 Figures 10 and 11) within said optical path, the phase shift provided by said material being dependent upon the intensity of the two light beams propagating therethrough.

3. A device according to Claim 1 wherein said phase shift varying means comprises means for varying the length of said resonator.

4. A device according to any of Claims 1 to 3 comprising:
a ring resonator comprising first and second oppositely disposed partial reflectors (12, 14) and first and second oppositely disposed totally reflecting mirrors (22, 24) said first partial reflector functioning as an optical input port (12) and said second partial reflector functioning as an optical output port (14);
means (46) responsive to the light energy transmitted through one of said partial reflectors for generating an electrical signal, the magnitude of which is proportional to the intensity of said light energy; and
means (35) responsive to said electrical signal for varying the phase shift of said light beams as the light beams propagate through said ring resonator.

5. A device according to Claim 4 wherein said electrical signal responsive means causes the position of one of said reflectors to vary in proportion to the magnitude of said electrical signal thus varying said phase shift by varying the effective length of said resonator.

6. A device according to Claim 4 wherein said electrical signal responsive means causes the index $n_o$ to vary by means of the electro-optic effect.

## Patentansprüche

1. Optische Logikgatter-Vorrichtung mit:
einem Ringresonator (20; 90; 201), um einen geschlossenen optischen Pfad bereitzustellen;
Einführungsvorrichtungen, um wenigstens zwei Lichtstrahlen (62; 63; 110; 112, 120; 122; 204; 207) in den optischen Pfad einzuführen;
Ausgabevorrichtungen, um ein Ausgangssignal bereitzustellen, das die Ausgangsintensität von wenigstens einem der eingeführten Lichtstrahlen darstellt; und
Phasenverschiebungs-Variationsvorrichtungen, um die optische Pfadlänge der eingeführten Strahlen in dem optischen Pfad in Abhängigkeit der Variationen der Strahlintensitäten zu variieren;
wobei die feldfreie Phasenverschiebung der eingeführten Lichtstrahlen ausgewählt wird, um eine nichtlineare Resonator-Transmissionscharakteristik so einzurichten, daß eine bestimmte logische Gatterfunktion bereitgestellt wird, dadurch gekennzeichnet, daß
die Einführungvorrichtungen, die wenigstens zwei Lichtstrahlen in entgegengesetzten Richtungen in

EP 0 190 223 B1

den optischen Pfad einführen, so daß das Ausgangssignal und die Wechselwirkung zwischen den eingeführten Strahlen unabhängig von der relativen Phase zwischen den Strahlen werden.

2. Vorrichtung nach Anspruch 1, worin die Phasenverschiebungs-Variationsvorrichtungen ein nicht lineares optisches Material (102 Figure 10 und 11) in dem optischen Pfad enthalten, wobei die durch das Material bereitgestellte Phasenverschiebung von der Intensität der es durchquerenden Lichtstrahlen abhängig ist.

3. Vorrichtung nach Anspruch 1, worin die Phasenverschiebungs-Variationsvorrichtungen Vorrichtungen zum Variieren der Länge des Resonators beinhalten.

4. Vorrichtung nach einem der Ansprüche 1 bis 3, mit:

einem Ringresonator mit ersten und zweiten gegenüberliegend angeordneten Teilreflektoren (12, 14) und ersten und zweiten gegenüberliegende angeordneten hochreflektierenden Spiegeln (22, 24), wobei der erste Teilreflektor als ein optisches Eingangstor (12) und der zweite Teilreflektor als ein optisches Ausgangstor (14) ausgebildet ist;

Vorrichtungen (46), die für die Lichtenergie empfänglich sind, die durch eine der Teilreflektoren hindurchgetreten ist, um ein elektrisches Signal zu erzeugen, dessen Größe proportional zu der Intensität der Lichtenergie ist; und

Vorrichtungen (35), die für das elektrische Signal empfänglich sind, um die Phasenverschiebung der Lichtstrahlen zu variieren, wenn die Lichtstrahlen durch den Ringresonator wandern.

5. Vorrichtung nach Anspruch 4, worin die Vorrichtungen, die für das elektrische Signal empfänglich sind, veranlassen, daß sich die Position von einem der Reflektoren proportional zu der Größe des elektrischen Signales verändert, was durch die Variation der effektiven Länge des Resonators zu einer Variation der Phasenverschiebung führt.

6. Vorrichtung nach Anspruch 4, worin die Vorrichtungen, die für das elektrische Signal empfänglich sind veranlassen, daß sich der Index $n_0$ aufgrund des elektro-optischen Effektes ändert.

**Revendications**

1. Dispositif formant porte logique optique, comprenant:

un résonateur en anneau (20; 90; 201) fournissant un trajet optique fermé;

des moyens d'introduction pour introduire au moins deux faisceaux de lumière (62; 63; 110; 112; 120; 122; 204; 207) dans ledit trajet optique;

des moyens de sortie pour fournir un signal de sortie représentatif de l'intensité de sortie d'au moins un desdits faisceaux de lumière introduits; et

des moyens de variation de déphasage pour faire varier la longueur du trajet optique desdits faisceaux introduits dans ledit trajet optique en fonction de variations des intensités de faisceaux,

le déphasage en champ nul desdits faisceaux de lumière introduits étant choisi pour établir une caractéristique de transmission non linéaire de résonateur telle qu'une fonction spécifique de porte logique soit réalisée, caractérisé en ce que:

lesdits moyens d'introduction introduisent lesdits au moins deux faisceaux de lumière dans ledit trajet optique en sens opposés, de sorte que le signal de sortie et l'interaction entre lesdits faisceaux introduits sont indépendants de la phase relative entre lesdits faisceaux.

2. Dispositif selon la revendication 1, dans lequel lesdits moyens de variation de déphasage comprennent un matériau optique non linéaire (102, figures 10 et 11) dans ledit chemin optique, le déphasage produit par ledit matériau dépendant de l'intensité des deux faisceaux de lumière qui se propagent à travers celui-ci.

3. Dispositif selon la revendication 1, dans lequel lesdits moyens de variation de déphasage comprennent des moyens pour faire varier la longueur dudit résonateur.

4. Dispositif selon l'une des revendications 1 à 3, comprenant:

un résonateur en anneau comprenant des premier et deuxième réflecteurs partiels disposés en opposition (12, 14) et des premier et deuxième miroirs totalement réfléchissants disposés en opposition (22, 24), ledit premier réflecteur partiel fonctionnant comme port d'entrée optique (12) et ledit deuxième réflecteur partial fonctionnant comme port de sortie optique (14);

des moyens (46) sensibles à l'énergie lumineuse transmise par l'un desdits réflecteurs partiels pour engendrer un signal électrique dont l'amplitude est proportionalle à l'intensité de ladite énergie lumineuse; et

des moyens (35) sensibles audit signal électrique pour faire varier le déphasage desdits faisceaux de lumière lorsque les faisceaux de lumière se propagent dans ledit résonateur en anneau.

5. Dispositif selon la revendication 4, dans lequel lesdits moyens sensibles au signal électrique provoquent une variation de la position de l'un desdits réflecteurs en proportion de l'amplitude dudit signal électrique, ce qui fait varier ledit déphasage en faisant varier la longueur effective dudit résonateur.

6. Dispositif selon la revendication 4, dans lequel lesdits moyens sensibles au signal électrique provoquent une variation de l'indice $n_0$ au moyen de l'effet électro-optique.

Fig. 1.

Fig. 2.

Fig. 4.

Fig. 3.

Fig. 6.

Fig. 7.

Fig. 8a.

Fig. 8b.

Fig. 8c.

Fig. 8d.

Fig. 8e.

Fig. 8f.

Fig. 5.

Fig. 9a.

OUTPUT FROM DET. 46

INPUT FROM DET. 84

INPUT FROM DET. 82

Fig. 9b.

OUTPUT FROM DET. 46

INPUT FROM DET. 84

INPUT FROM DET. 82

F i g. 10.

F i g. 11.

F i g. 12.